# DEMANDE DE BREVET EUROPEEN

(11) **EP 1 542 424 A1**
(43) Date de publication de la demande: **15.06.2005**
(21) Numéro de dépôt: 03293146.1
(22) Date de dépôt: 12.12.2003
(51) Int. Cl.: H04L 29/06, H04Q 7/22, G06F 17/30

(54) **Système et procédé de partage de données entre des terminaux WAP**

(71) Demandeur: FRANCE TELECOM, 75015 Paris (FR)
(72) Inventeur: Guisnet, Betrand, 92130 Issy Les Moulineaux (FR); Vergouwen, Thomas, 99240 Malakoff (FR); Leprince, Laurent, 91190 Gif sur Yvette (FR)
(74) Mandataire: Bonnier, Patrick

(57) **Abrégé**

Système de partage entre au moins un premier terminal WAP (10, 11), visualisant au moins une donnée située dans au moins un réseau (30) de communication comprenant au moins une passerelle WAP (20), et au moins un deuxième terminal WAP (10', 11'), mettant en oeuvre au moins une fonction de réception automatique en mode "push".

Selon l'invention, ledit système est remarquable en ce qu'il comprend au moins un dispositif (25) de commande de partage, hébergé par ladite passerelle WAP (20), apte à gérer au moins un paramètre au cours dudit partage de données et au moins un dispositif intermédiaire (23), hébergé par ladite passerelle WAP (20), apte à introduire au moins un élément spécifique audit partage dans au moins une donnée à partager entre lesdits premier et deuxième terminaux WAP (10, 11, 10', 11').

Application au partage d'au moins une donnée entre différents terminaux distants.

## Description

La présente invention concerne un système et un procédé de partage de données entre des terminaux WAP (Wireless Application Protocol, soit protocole d'application sans fil).

L'invention s'applique plus particulièrement au partage à distance entre au moins un premier terminal WAP, visualisant au moins une donnée, et au moins un deuxième terminal WAP.

Un terminal dit "WAP" est un terminal équipé d'un navigateur WAP, compatible avec le protocole d'application sans fil, appelé WAP. Ledit protocole WAP est normalisé par l'organisme de normalisation du WAP, soit l'OMA (Open Mobile Alliance).

Un serveur de diffusion de données d'un réseau de communication, par exemple le réseau Internet ou bien un réseau privé de communication d'entreprise, fournit des données vers un terminal WAP lorsque celui-ci établit une connexion vers ledit serveur de diffusion de données.

Actuellement, l'évolution du travail coopératif en équipes, réparties par exemple sur plusieurs sites géographiques, rend nécessaire le partage de données. Le partage de données permet à plusieurs personnes de collaborer ensemble.

Les données à partager peuvent être de nature très diverse, par exemple une page vierge ou avec du texte, un document intégrant une image, une photo ou un plan, un site web sur le réseau Internet, un fichier vidéo ou audio, etc...

Les systèmes existants de transmission de données permettent une transmission multipoint en temps réel sous forme de conférence multimédia, soit vocale, soit visuelle, soit écrite, etc... Pour accéder ou bien échanger lesdites données de toute nature, les terminaux doivent être équipés d'une application spécifique aux dites données, ce qui requière une capacité de traitement et une capacité mémoire importantes sur lesdits terminaux. La bande passante nécessaire pour accéder ou échanger lesdites données est également importante.

Par conséquent, lesdits systèmes sont réservés pour des terminaux à grande capacité mémoire et de traitement, terminaux de type ordinateur personnel (ou PC, Personal Computer) ou bien de type assistant personnel numérique (ou PDA, Personal Digital Assistant), raccordés sur des réseaux de télécommunications à large bande passante tels que les réseaux de télécommunications fixes.

De ce fait, le partage de données est peu adapté aux réseaux cellulaires de communications avec les mobiles, ainsi qu'à des terminaux sans grande capacité mémoire, notamment les terminaux WAP.

De plus, dans le document EP 02 291 486 est présenté le cas du partage à distance de données, adapté aux réseaux cellulaires de communications avec les mobiles, ainsi qu'à des terminaux sans grande capacité mémoire, notamment les terminaux WAP, en utilisant au moins un serveur de partage de données.

Ledit serveur de partage de données sert d'intermédiaire entre un premier terminal WAP, qui souhaite partager une donnée, et au moins un deuxième terminal WAP. Le serveur de partage de données réalise la gestion du partage à distance de données entre lesdits premier et deuxième terminaux WAP. Le serveur de partage de données reçoit toutes les requêtes en provenance des terminaux WAP, les analyse et les renvoie vers un serveur de diffusion de données après identification desdits terminaux WAP. Le serveur de partage de données dialogue avec un serveur de diffusion automatique en mode "push" pour commander la diffusion desdites données.

Le serveur de partage de données reçoit la donnée en provenance dudit serveur de diffusion de données, réalise autant de copies de ladite donnée que de deuxièmes terminaux WAP distants et transmet les copies de ladite donnée après traitement vers lesdits premier et deuxième terminaux WAP pour une consultation simultanée. Le document EP 02 291 486 présente la visualisation d'une donnée en mode partagé entre des terminaux WAP uniquement grâce à un serveur de partage de données, mis en place spécifiquement dans un réseau de communication. Ledit réseau de communication est modifié pour implanter et pour dialoguer avec ledit serveur de partage de données.

Enfin, le document EP 01 164 765 décrit un système de partage de contenus dans un réseau sans fil. Ledit système propose un moyen pour envoyer l'adresse d'un contenu vers un autre mobile grâce à un serveur d'application qui transmet l'adresse correspondant au contenu vers l'adresse de destination. Les mobiles doivent aller chercher ledit contenu à l'adresse transmise. Les contenus ne sont pas transférés vers les mobiles. Le système propose également des fonctions supplémentaires, telle que l'envoi différé du contenu, l'adaptation du contenu, etc...

Par contre, ledit système décrit ne permet pas un véritable partage interactif entre les différents utilisateurs. De plus, ledit système ne prévoit aucun moyen d'avoir connaissance de l'état des communications des mobiles, par exemple grâce à un serveur de présence dans le réseau sans fil.

Aussi, le problème technique à résoudre par l'objet de la présente invention est de proposer un système et un procédé de partage entre au moins un premier terminal WAP, visualisant au moins une donnée située dans au moins un réseau de communication comprenant au moins une passerelle WAP, et au moins un deuxième terminal WAP, mettant en oeuvre au moins une fonction de réception automatique en mode "push", qui permettrait de remédier aux inconvénients des systèmes existants en rendant accessible le partage de données aux terminaux WAP sans mise en place d'un serveur spécifique audit partage de données.

La solution au problème technique posé consiste, selon la présente invention, en ce que ledit système comprend au moins un dispositif de commande de partage, hébergé par ladite passerelle WAP, apte à gérer au moins un paramètre au cours dudit partage de données et au moins un dispositif intermédiaire, hébergé par ladite passerelle WAP, apte à introduire au moins un élément spécifique audit partage dans au moins une donnée à partager entre lesdits premier et deuxième terminaux WAP.

L'invention a également pour objet un procédé de partage entre au moins un premier terminal WAP, visualisant au moins une donnée située dans au moins un réseau de communication comprenant au moins une passerelle WAP, et au moins un deuxième terminal WAP, mettant en oeuvre au moins une fonction de réception automatique en mode "push", remarquable en ce que ledit procédé comporte les étapes consistant à : visualiser par au moins un premier terminal WAP au moins une donnée en provenance d'au moins un serveur de diffusion de données, situé dans ledit réseau de communication ; transmettre au moins une demande de partage de ladite donnée par ledit premier terminal WAP vers au moins un dispositif de commande de partage, hébergé par ladite passerelle WAP ; introduire dans ladite donnée à partager par au moins un dispositif intermédiaire, hébergé par ladite passerelle WAP, au moins un élément spécifique audit partage entre lesdits premier et deuxième terminaux WAP ; identifier ledit deuxième terminal WAP par ledit dispositif de commande de partage ; commander la transmission d'au moins une notification par ledit dispositif de commande de partage vers ledit deuxième terminal WAP pour accepter le partage de données ; dans le cas d'accord dudit deuxième terminal WAP, créer au moins une session WAP du partage par ledit dispositif de commande de partage pour identifier ledit partage de données ; transmettre au moins un paramètre dudit partage de données par ledit dispositif de commande de partage vers au moins une interface WAP de ladite passerelle WAP ; commander par ladite interface WAP la transmission de ladite donnée à partager vers lesdits premier et deuxième terminaux WAP ; visualiser par lesdits premier et deuxième terminaux WAP ladite donnée à partager.

Selon l'invention, de nouvelles fonctionnalités sont ajoutées pour gérer un partage de données à la passerelle WAP existante dans le réseau de communication, dans lequel est situé le serveur de diffusion de données. Une interface WAP, également existante dans ladite passerelle WAP, sert d'intermédiaire entre lesdits premier et deuxième terminaux WAP. Comme prévue actuellement, celle-ci sert d'interface entre ledit réseau de communication et le réseau de télécommunications, sur lequel sont raccordés lesdits terminaux WAP.

Ladite interface WAP transmet vers un dispositif de commande de partage, hébergé par ladite passerelle WAP, une demande de partage en provenance du premier terminal WAP. Pour pouvoir réaliser ledit partage de données sans serveur spécifique, un dispositif intermédiaire (ou Proxy) introduit automatiquement un élément spécifique audit partage de données, tel qu'un lien hypertexte dénommé "Partager". Grâce audit élément spécifique introduit, le système de partage de données, conforme à l'invention, permet de proposer ledit partage à au moins un deuxième terminal WAP.

Ledit dispositif de commande de partage identifie lesdits terminaux WAP participants au partage de données et créé un session WAP du partage regroupant tous les paramètres correspondant audit partage de données, tels que les identifiants desdits premier et deuxième terminaux WAP. La création de ladite session WAP du partage permet l'identification et la gestion dudit partage de données entre lesdits premier et deuxième terminaux WAP.

Après l'accord dudit deuxième terminal WAP pour le partage de données, une interface WAP de ladite passerelle WAP, commandée par le dispositif de commande de partage, transmet alors la donnée à partager vers lesdits premier et deuxième terminaux WAP.

Conformément à l'invention, ledit dispositif intermédiaire modifie ledit élément spécifique audit partage, introduit dans ladite donnée à partager, pour la commande de l'arrêt du partage de ladite donnée.

Après avoir introduit automatiquement un élément spécifique audit partage de données, tel qu'un lien hypertexte dénommé "Partager", ledit dispositif intermédiaire introduit un nouvel élément spécifique, tel qu'un lien hypertexte "Arrêt du partage". Ledit élément spécifique modifié permet de proposer l'arrêt dudit partage de données aux premier et deuxième terminaux WAP.

Selon l'invention, le partage de ladite donnée est réalisé à distance.

Lesdits système et procédé de partage de données sont compatibles avec tous les types de terminaux WAP push, indifféremment fixes ou mobiles, raccordés sur tous les types de réseaux de télécommunications, fixes ou cellulaires. Par conséquent, l'invention permet le partage à distance entre des terminaux WAP de différente nature, indifféremment fixes ou mobiles.

Selon l'invention, ledit partage de données est interactif entre lesdits premier et deuxième terminaux WAP.

Selon l'invention, ladite donnée à partager est visualisée sensiblement en temps réel par lesdits premier et deuxième terminaux WAP.

Selon l'invention, ledit dispositif intermédiaire suspend le traitement d'une nouvelle demande de partage de données en provenance de l'un desdits premier et deuxième terminaux WAP lorsque ledit partage de données est en cours de traitement.

Selon l'invention, l'un desdits premier et deuxième terminaux WAP commande l'arrêt dudit partage de données à partir de ladite donnée partagée vers ledit dispositif de commande de partage.

Une fois le partage d'une donnée réalisé entre lesdits premier et deuxième terminaux WAP, l'un desdits terminaux WAP peut indifféremment commander une nouvelle demande de partage de données, que ledit terminal ait initialisé ou non ledit partage de données en cours.

Quelque soit le terminal qui commande le partage d'une donnée, ladite donnée est transmise sensiblement en temps réel par ladite interface WAP de la passerelle WAP vers lesdits premier et deuxième terminaux WAP.

Le partage de données, conforme à l'invention, est véritablement interactif car n'importe quel utilisateur d'un desdits terminaux participants peut commander le partage d'une nouvelle donnée ou l'arrêt dudit partage de données.

Lorsque plusieurs terminaux WAP participant à une session de partage commandent simultanément une nouvelle demande de partage, ledit dispositif de commande de partage ne traite qu'une seule demande et suspend le traitement de toute autre demande de partage de données, simultanée à celle en cours et en provenance de l'un desdits premier et deuxième terminaux WAP.

Conformément à l'invention, le partage de ladite donnée est mis en oeuvre simultanément avec au moins une communication vocale entre lesdits premier et deuxième terminaux WAP par l'intermédiaire d'au moins un réseau de télécommunications.

Conformément à l'invention, le partage de ladite donnée est mis en oeuvre simultanément avec au moins une communication écrite, en mode instantané, entre lesdits premier et deuxième terminaux WAP par l'intermédiaire d'au moins un réseau de télécommunications.

Bien que non indispensable au fonctionnement technique dudit système de partage de données, la liaison vocale ou bien la liaison écrite facilite le dialogue pendant le partage de données entre les différents utilisateurs distants.

Selon l'invention, au moins un serveur de présence transmet l'état de communication desdits premier et deuxième terminaux WAP vers ledit dispositif de commande de partage.

Un serveur de présence, existant dans ledit réseau de communication, assure normalement le suivi de l'état dans lequel se trouve lesdits premier et deuxième terminaux WAP. Ledit dispositif de commande de partage peut interroger ledit serveur de présence pour connaître les communications établies par lesdits premier et deuxième terminaux WAP participants au partage de données.

Conformément à l'invention, lesdits premier et deuxième terminaux WAP étant en communication vocale ou écrite, au moins un troisième terminal WAP entre dans ledit partage de données après l'établissement d'une conférence à trois.

Conformément à l'invention, ledit dispositif intermédiaire introduit dans ladite donnée à partager un deuxième élément spécifique pour ajouter au moins un troisième terminal WAP dans ledit partage de données.

Les participants au partage de données peuvent inviter un correspondant à la session de partage en cours. Pour ce faire, un troisième terminal WAP est introduit dans la communication établie entre lesdits premier et deuxième terminaux WAP grâce à une conférence à trois. Ou bien, l'un desdits premier et deuxième terminaux WAP peut faire entrer ledit nouveau correspondant grâce à un deuxième élément spécifique, tel qu'un lien hypertexte dénommé "ajouter correspondant", introduit par ledit dispositif intermédiaire dans ladite donnée à partager. Ledit lien hypertexte permet la transmission directe d'une requête vers ledit dispositif de commande de partage pour participer audit partage de données.

La description qui va suivre en regard du dessin annexé, donné à titre d'exemple non limitatif, fera bien comprendre en quoi consiste l'invention, comment elle peut être réalisée et d'autres caractéristiques de l'invention en ressortiront.

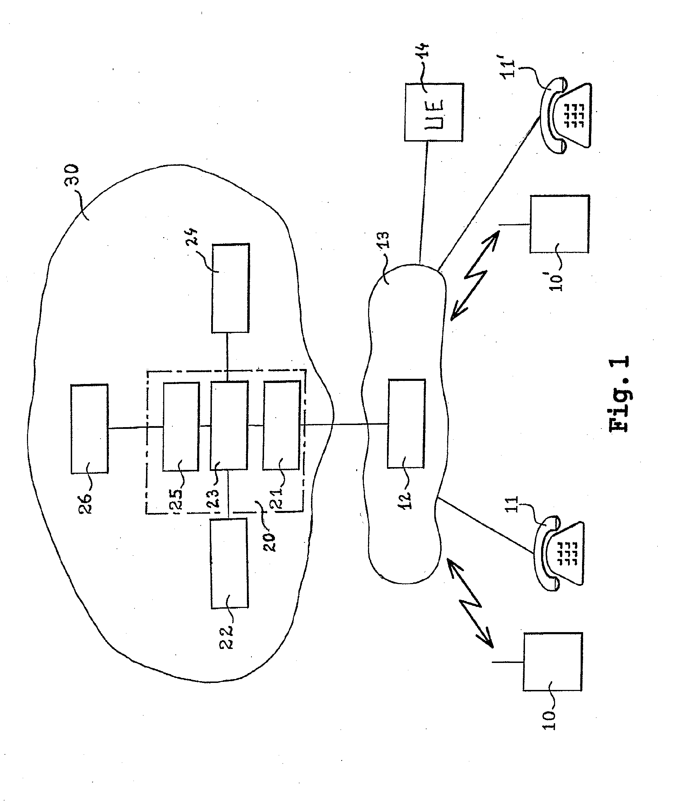

La figure 1 est un schéma de l'architecture générale d'un système de partage de données entre des terminaux WAP, conforme à l'invention.

L'utilisateur d'un premier terminal WAP 10, 11 est en communication à distance avec l'utilisateur d'un deuxième terminal WAP 10', 11'.

La communication peut également être établie à distance avec plusieurs interlocuteurs, en plus desdits premier et deuxième terminaux WAP 10, 11, 10', 11'.

L'objet de l'invention s'applique à tout type de premier ou deuxième terminal équipé d'un navigateur WAP push, compatible avec le protocole d'application sans fil, appelé WAP (Wireless Application Protocol), que ledit terminal soit un terminal mobile 10, 10' ou bien un terminal 11, 11' raccordé à un réseau fixe.

Ladite communication entre les différents interlocuteurs distants peut être une communication vocale ou bien une vidéocommunication, établie par l'intermédiaire d'un réseau cellulaire de télécommunications pour les mobiles ou bien par l'intermédiaire d'un réseau filaire de télécommunications fixes.

Ladite communication entre les différents interlocuteurs distants peut également être une communication écrite, de manière à permettre un échange en temps réel ou en quasi-temps réel. Ladite communication écrite est, par exemple, une communication par une messagerie électronique ou bien par une messagerie instantanée de type "chat" ou "instant messaging".

L'établissement d'une communication entre lesdits premier et deuxième terminaux WAP 10, 11, 10', 11' n'est pas lié à la mise en oeuvre de l'invention. Celle-ci facilite le partage de données en permettant un échange préalable pour avertir les participants au partage de données.

Au cours de ladite communication établie, l'utilisateur du premier terminal WAP 10, 11 ouvre un navigateur WAP push, en place sur ledit premier terminal WAP 10, 11. Ledit navigateur WAP push lui permet d'interroger au moins un serveur 22 de diffusion de données pour recevoir au moins une donnée, que l'utilisateur souhaite partager.

Ledit serveur 22 de diffusion de données est situé dans tout type de réseau 30 de communication, par exemple le réseau Internet ou un réseau intranet privé de communication d'entreprise, qui comprend au moins un serveur de diffusion de données.

La connexion entre le premier terminal WAP 10, 11 et le serveur 22 de diffusion de données est établie par l'intermédiaire dudit réseau 13 de télécommunications, indifféremment fixe ou cellulaire, auquel est raccordé le premier terminal WAP 10, 11.

En général, il existe un équipement 12 de gestion d'accès à un réseau de communication dans les différents réseaux 13 de télécommunications, indifféremment fixes ou cellulaires, pour établir la connexion avec un réseau 30 de communication.

Par exemple, dans le cas d'un réseau 13 de télécommunication fixe, ledit équipement 12 de gestion d'accès à un réseau 30 de communication est un équipement appelé "NAS" (Network Access Server, soit serveur d'accès réseau).

Egalement, dans le cas d'un réseau 13 de télécommunications pour les mobiles de type GPRS (Général Packet Radio Service, soit service général de radiocommunication en mode paquet), ledit équipement 12 de gestion d'accès à un réseau 30 de communication est alors un équipement appelé "GGSN (Gateway GPRS Service Node, soit noeud de service GPRS de transit).

De la même façon, au moins une passerelle WAP 20 appelée "Gateway WAP" existe dans ledit réseau 30 de communication pour gérer l'interconnexion entre lesdits terminaux WAP 10, 11, 10', 11' et ledit serveur 22 de diffusion de données dudit réseau 30 de communication.

Ladite passerelle WAP 20 a pour fonction de permettre la connexion entre un terminal WAP et un serveur WAP. Selon l'invention, pour le partage de données, ladite passerelle WAP 20 est équipée pour gérer au moins une session WAP dudit partage de données.

La passerelle WAP 20 comprend au moins une interface WAP 21, un dispositif intermédiaire 23 (ou proxy) et un dispositif 25 de commande de partage, dont les fonctions sont décrites ci-après.

Ledit équipement 12 de gestion d'accès à un réseau de communication établit la connexion avec ledit réseau 30 de communication, dans lequel se trouve ledit serveur 22 de diffusion de données, grâce à une interface WAP 21 située dans ladite passerelle WAP 20 ou "Gateway WAP".

Ladite interface WAP 21, hébergée par la passerelle WAP 20, permet la connexion entre au moins un terminal WAP et ledit serveur 22 de diffusion de données. Ladite interface WAP 21 est transparente vis-à-vis des requêtes qui transitent par son intermédiaire, soit vers lesdits terminaux WAP 10, 11, 10', 11' ou vers le serveur 22 de diffusion de données ou bien vers ledit dispositif 25 de commande de partage. Conformément à l'invention, l'interface WAP 21 reçoit et stocke au moins un paramètre dudit partage de données, tel que la session WAP du partage ou les identifiants desdits participants au partage de données.

Le serveur 22 de diffusion de données transfère une donnée vers ledit premier terminal WAP 10, 11 grâce à ladite interface WAP 21 de la passerelle WAP 20.

Ladite donnée transférée est de toute nature, par exemple une page au format WML (Wireless Markup Language, soit langage à balisage pour sans fil), un contenu au format XML (eXtensible Markup Language, soit langage à balisage évolué), une image au format Flash ou bien tout autre format de données.

Ladite donnée transmise est visualisée par ledit premier terminal WAP 10, 11. L'utilisateur dudit premier terminal WAP 10, 11 actionne une demande de partage de ladite donnée visualisée. Ladite demande de partage de données, en provenance dudit premier terminal WAP 10, 11, est transmise vers au moins un dispositif 25 de commande de partage via l'interface WAP 21 de ladite passerelle WAP 20.

Pour ce faire, ledit premier terminal WAP 10, 11 envoie vers ledit dispositif 25 de commande de partage une requête, qui comprend au moins un paramètre concernant le partage de données.

Après réception de ladite requête, le dispositif 25 de commande de partage transmet un message vers ledit premier terminal WAP 10, 11 via au moins un dispositif intermédiaire 23 (ou proxy) avec au moins un paramètre correspondant à l'adresse URL (Uniform Resource Locator, soit localisateur de ressources uniformes) de ladite donnée à partager dans ledit serveur 22 de diffusion de données.

Ledit dispositif intermédiaire 23 (ou proxy), hébergé par la passerelle WAP 20, a pour fonction d'enrichir automatiquement les données à partager en provenance d'un serveur 22 de diffusion de données, en particulier en introduisant un élément, tel qu'un lien hypertexte, spécifique au partage dans ladite donnée à partager. Ledit lien hypertexte peut être contextuel (partage en cours, attente, etc...) et est commandé par le dispositif 25 de commande de partage.

Le dispositif intermédiaire 23 de la passerelle WAP 20 enrichit alors ladite donnée à partager en introduisant automatiquement un premier lien hypertexte dénommé "Partager". Ledit lien hypertexte "Partager" est prévu pour établir la connexion avec ledit dispositif 25 de commande de partage de ladite passerelle WAP 20 et pour transmettre au moins ledit paramètre correspondant à l'adresse URL de ladite donnée à partager dans ledit serveur 22 de diffusion de données.

Le système peut prévoir que la donnée en provenance dudit serveur 22 de diffusion de données contienne déjà un lien hypertexte "Partager". Dans ce cas, le dispositif intermédiaire 23 de la passerelle WAP 20 n'introduit pas ledit lien "Partager" dans ladite donnée à partager si ledit terminal WAP 10, 11 ne participe pas à une session de partage ou bien il supprime le lien hypertexte "Partager" si ledit terminal 10, 11 participe déjà à une session de partage de données.

Ledit élément spécifique, soit le lien hypertexte, peut être géré dynamiquement en fonction de l'état dudit premier terminal WAP 10, 11, par exemple, lien dénommé "Sortie du partage" lorsqu'un desdits terminaux a coupé la communication établie.

Ledit dispositif intermédiaire 23 peut également introduire dans ladite donnée à partager un deuxième élément spécifique, tel qu'un lien hypertexte dénommé "ajouter correspondant". Ledit lien hypertexte permet la transmission directe d'une requête vers ledit dispositif 25 de commande de partage pour participer audit partage de données pour ajouter un troisième terminal WAP 14 au cours du partage de données.

A la réception de la donnée enrichie, le premier terminal WAP 10, 11 clique sur ledit lien hypertexte "Partager" existant sur la donnée visualisée. Par ce fait, ledit premier terminal WAP 10, 11 envoie une requête vers ledit dispositif 25 de commande de partage de la passerelle WAP 20.

Ledit dispositif 25 de commande de partage, hébergé par la passerelle WAP 20, gère la session WAP et les paramètres du partage de données. Il reçoit les requêtes d'acceptation et d'arrêt de partage en provenance desdits terminaux WAP 10, 11, 10', 11' et transmet vers au moins un serveur WAP 24 de diffusion automatique en mode "push", via l'interface WAP 21, les paramètres de ladite session WAP au cours dudit partage de données. Il suit l'état de communication desdits terminaux WAP participants audit partage de données.

Ledit premier terminal WAP 10, 11 reçoit une page demandant à l'utilisateur d'indiquer les participants au partage de données, par exemple le numéro de téléphone dudit deuxième terminal WAP 10', 11'.

L'utilisateur dudit premier terminal WAP 10, 11 peut indiquer le numéro téléphonique de l'utilisateur dudit deuxième terminal WAP 10', 11', indifféremment raccordé en fixe ou en mobile. Il peut également indiquer l'identifiant dudit deuxième terminal WAP 10', 11' ou bien son adresse IP (Internet Protocol) ou son adresse sur messagerie ou tout autre adresse de communication. Il peut également indiquer le nom de l'utilisateur dudit deuxième terminal WAP 10', 11' à partir d'un répertoire intégré au système ou bien toute combinaison des différents moyens d'identification dudit deuxième terminal WAP 10', 11'.

Ladite donnée peut également être partagée avec plusieurs interlocuteurs distants, en plus desdits premier et deuxième terminaux WAP 10, 11, 10', 11'.

Une fois les participants au partage de données mentionnés, ladite page est transmise vers le dispositif 25 de commande de partage permettant d'identifier ledit deuxième terminal WAP 10', 11'.

Ledit dispositif 25 de commande de partage de la passerelle WAP 20 a la possibilité d'émettre une requête vers au moins un serveur 26 de présence dudit réseau 30 de communication pour connaître l'état de communication du premier terminal WAP 10, 11. En réponse, le dispositif 25 de commande de partage est informé par ledit serveur 26 de présence si le premier terminal WAP 10, 11 est en communication avec le ou lesdits deuxièmes terminaux WAP 10', 11'.

Ledit serveur 26 de présence met à disposition l'état de communication desdits terminaux WAP 10, 11, 10', 11', tel que l'existence d'une communication entre lesdits premier et deuxième terminaux WAP 10, 11, 10', 11' et indique des changements d'état desdits terminaux.

Le dispositif 25 de commande de partage de la passerelle WAP 20 envoie ensuite une page d'attente vers ledit premier terminal WAP 10, 11 via ladite interface WAP 21 et le dispositif intermédiaire 23 de la passerelle WAP 20.

De plus, ledit dispositif 25 de commande de partage de la passerelle WAP 20 envoie une requête vers au moins un serveur WAP 24 de diffusion automatique en mode "push" pour commander la transmission d'au moins une notification vers ledit deuxième terminal WAP 10', 11'.

L'ordre d'exécution des transmissions à partir dudit dispositif 25 de commande de partage peut être différent de celui qui vient d'être décrit ci-dessus.

La diffusion automatique de messages en mode "push" permet l'envoie d'un message sans intervention, ni demande du destinataire dudit message. Ledit message transmis en mode push peut, soit contenir directement des informations, soit indiquer une adresse URL pour accéder aux dites informations. Ladite diffusion automatique en mode "push" est normalisée par l'organisme de normalisation du WAP, soit le WAP Forum.

Selon la nature du réseau 13 de télécommunications sur lequel est raccordé ledit terminal WAP 10, 11, ledit serveur WAP 24 de diffusion automatique en mode "push" peut comprendre plusieurs équipements, tels qu'un équipement d'initiation de push (Push Initiator), un équipement d'interface de push ou "Push Proxy" ou tout autre équipement.

Ledit serveur WAP 24 de diffusion automatique en mode "push" envoie vers ledit deuxième terminal WAP 10', 11' un message en mode "push" de type SI (Service Indication, soit indication de service), qui inclut au moins une notification, par exemple un message texte, pour accepter le partage de données avec le premier terminal WAP 10, 11.

Ledit message "push" de type SI comprend également une adresse URL permettant la connexion vers ledit dispositif 25 de commande de partage, qui a sollicité ledit serveur WAP 24 de diffusion automatique en mode "push".

Ledit deuxième terminal WAP 10', 11', mettant en oeuvre au moins une fonction de réception automatique en mode "push", reçoit de façon automatique ladite notification émise par ledit serveur WAP 24 de diffusion automatique en mode "push" sur demande dudit dispositif 25 de commande de partage, notification qui est par exemple affichée par un moyen d'affichage, tel qu'un écran dudit terminal.

Lorsque le deuxième terminal WAP 10', 11' donne son accord pour le partage de données grâce à la notification, une requête d'acceptation de partage est transmise vers ledit dispositif 25 de commande de partage via ladite interface WAP 21 et le dispositif intermédiaire 23 de la passerelle WAP 20. Si le deuxième terminal WAP 10', 11' n'a pas de session WAP en cours, pas de navigateur WAP utilisé, ladite interface WAP 21 établie une session WAP pour connecter ledit deuxième terminal WAP 10', 11' à ladite passerelle WAP 20.

A la réception de ladite requête d'acceptation de partage, ledit dispositif 25 de commande de partage créé une session WAP du partage de données pour identifier et gérer ledit partage de données concernant lesdits premier et deuxième terminaux WAP 10, 11, 10', 11'. Ledit partage de données, initialisé entre lesdits premier et deuxième terminaux WAP 10, 11, 10', 11', est alors identifié par ladite session WAP du partage créée.

Par ailleurs, le dispositif 25 de commande de partage transmet vers ladite interface WAP 21 au moins un paramètre dudit partage de données existant entre lesdits premier et deuxième terminaux WAP 10, 11, 10', 11'.

Les paramètres liés à ladite session WAP du partage de données sont mis à jour dans ladite interface WAP 21 de la passerelle WAP 20, tel que : le premier terminal WAP 10, 11 partage avec le deuxième terminal WAP 10', 11' et le numéro identifiant du deuxième terminal WAP 10', 11' ; le deuxième terminal WAP 10', 11' partage avec le premier terminal WAP 10, 11 et le numéro identifiant du premier terminal WAP 10, 11.

De plus, ledit dispositif 25 de commande de partage indique au dispositif intermédiaire 23 de la passerelle WAP 20 que doit être modifié ledit élément spécifique audit partage introduit dans la donnée à partager, soit le lien hypertexte "Partager" existant. Ledit dispositif intermédiaire 23 introduit alors un nouveau lien hypertexte "Arrêt du partage" pour commander l'arrêt du partage de ladite donnée, ledit nouveau lien hypertexte permettant la connexion vers le dispositif 25 de commande de partage de ladite passerelle WAP 20.

Ledit élément spécifique, soit le lien hypertexte, peut également être modifié, si l'un desdits terminaux WAP est un terminal mobile, lorsque ledit terminal mobile est hors de communication dans le réseau 13 de télécommunications mobiles. Ledit élément spécifique, soit par exemple un lien hypertexte dénommé 'Sortie du partage", peut être géré dynamiquement en fonction de l'état desdits premier et deuxième terminaux WAP 10, 11, 10', 11'.

Si ledit serveur 26 de présence du réseau 30 de communication a été précédemment sollicité, ledit dispositif 25 de commande de partage de la passerelle WAP 20 lui indique qu'il doit l'informer de l'état des communications établies à partir desdits premier et deuxième terminaux WAP 10, 11, 10', 11', ainsi que de tout changement d'état desdites communications.

Ledit serveur 26 de présence peut également commander ledit élément spécifique, soit le lien hypertexte, compte tenu des informations qu'il connaît sur l'état des communications desdits terminaux WAP 10, 11, 10', 11

Enfin, via ladite interface WAP 21 et le dispositif intermédiaire 23 de la passerelle WAP 20, le dispositif 25 de commande de partage envoie une requête pour diriger ledit deuxième terminal WAP 10', 11' vers la donnée à partir de laquelle ledit premier terminal WAP 10, 11 a demandé le partage.

L'ordre d'exécution des transmissions à partir dudit dispositif 25 de commande de partage peut être différent de celui qui vient d'être décrit ci-dessus.

A la réception de ladite requête de redirection, ledit deuxième terminal WAP 10', 11' envoie une requête vers le serveur 22 de diffusion de données, via ladite interface WAP 21 et ledit dispositif intermédiaire 23 de la passerelle WAP 20, pour la transmission de la donnée à partager.

Ledit serveur 22 de diffusion de données transmet ladite donnée à partager vers le deuxième terminal WAP 10', 11'.

Au passage de ladite requête, l'interface WAP 21 de la passerelle WAP 20 transmet une demande d'envoi d'un message de type SL (Service Loading, soit chargement de service) vers ledit serveur WAP 24 de diffusion automatique en mode "push" pour commander la transmission de l'adresse URL de la donnée à partager.

A la réception dudit message, ledit serveur WAP 24 de diffusion automatique en mode "push" envoie vers le premier terminal WAP 10, 11 une requête en mode "push", qui inclut au moins ladite adresse URL de la donnée à partager, ainsi qu'au moins un paramètre "ActionPush=NOK" indiquant à ladite interface WAP 21 de ne pas émettre un message en mode "push".

L'interface WAP 21 de la passerelle WAP 20 reçoit ledit paramètre "ActionPush=NOK" transmis et envoie une requête vers le serveur 22 de diffusion de données pour commander la transmission de la donnée à partager vers ledit premier terminal WAP 10, 11.

Ledit serveur 22 de diffusion de données transmet ladite donnée à partager vers le premier terminal WAP 10, 11, via l'interface WAP 21 de la passerelle WAP 20.

Ladite donnée est visualisée, si les réseaux et terminaux le permettent, quasiment en même temps par lesdits premier et deuxième terminaux WAP, qui peuvent naviguer simultanément.

La communication vocale ou écrite, déjà établie entre lesdits premier et deuxième terminaux WAP 10, 11, 10', 11', évite la surprise de l'utilisateur dudit deuxième terminal WAP 10', 11', mais elle n'est pas techniquement indispensable au fonctionnement dudit système de partage de données, conforme à l'invention.

Lesdits interface WAP 21, dispositif intermédiaire 23 et dispositif 25 de commande de partage sont inclus dans un seul équipement, la passerelle WAP 20, de manière à faciliter l'implémentation du système conforme à l'invention, en n'ajoutant des fonctionnalités que sur un seul équipement existant dans ledit réseau 30 de communication. De ce fait, l'interopérabilité du service de partage de données est plus facile à réaliser dans des réseaux de communication gérés par des opérateurs différents.

Les fonctions déjà effectuées par la passerelle WAP 20, telle que celles de l'interface WAP 21, n'ont pas à être à nouveau mises en oeuvre par le serveur de partage de données décrit dans le document EP 02 291 486.

Comme le réseau 30 de communication n'est pas modifié en ajoutant ledit serveur de partage de données, les temps de réponse pour effectuer les différentes étapes du procédé conforme à l'invention sont plus courts. Par conséquent, le partage complet d'une donnée est plus rapide.

Par ailleurs, ledit serveur de partage de données traitait et réalisait des copies de ladite donnée à partager. Ces copies et ces traitements n'existent plus. La donnée à partager est directement transmise par le serveur 22 de diffusion de données.

De plus, la passerelle WAP 20 entre directement en liaison avec lesdits terminaux WAP 10, 11, 10', 11', sans l'intermédiaire dudit serveur de partage de données. Les transmissions sont donc plus sécurisées, car la passerelle WAP 20 peut identifier lesdits terminaux WAP 10, 11, 10', 11'. Il est également possible de prévoir des fonctions d'authentification desdits terminaux WAP 10, 11, 10', 11'.

L'invention peut également être mise en oeuvre avec un dispositif intermédiaire 23, situé en dehors de la passerelle WAP 20. Les étapes du procédé conforme à l'invention se déroulent alors de manière parfaitement identique à la description ci-dessus. Dans ce cas, le dispositif intermédiaire 23 séparé de ladite passerelle WAP 20 peut être réalisé par un serveur "Proxy" sans fonction particulière propre au partage de données.

Le dispositif 25 de commande de partage peut également être situé en dehors de la passerelle WAP 20 et de la même façon, les étapes du procédé conforme à l'invention se déroulent de manière parfaitement identique à la description ci-dessus, avec un dispositif 25 de commande de partage séparé de ladite passerelle WAP 20. Cette dernière mise en oeuvre permet d'utiliser des passerelles WAP 20 différentes pour les premier et deuxième terminaux WAP 10, 11, 10', 11'. Ledit dispositif 25 de commande de partage indique aux différentes passerelles WAP 20 correspondant auxdits terminaux qu'une session WAP du partage doit être démarrée ou bien arrêtée.

Après réception de ladite donnée à partager, lesdits premier et deuxième terminaux WAP 10, 11, 10', 11' peuvent décider de sortir du partage de données et de naviguer séparément sur des données.

De la même façon, ils peuvent décider de continuer ou non la communication vocale ou écrite en cours.

Dans le cas de la poursuite du partage de données, ladite donnée est à présent accessible par lesdits premier et deuxième terminaux WAP 10, 11, 10', 11'.

Les différents utilisateurs peuvent indifféremment commander un partage de données et naviguer sur différentes données simultanément. Comme le traitement de ladite première demande de partage de données est terminé, ledit dispositif 25 de commande de partage est disponible pour recevoir toute nouvelle demande de partage de données, qui peut être commander par l'un desdits premier et deuxième terminaux WAP 10, 11, 10', 11'.

A ce moment là, aussi bien ledit premier terminal WAP 10, 11 que ledit deuxième terminal WAP 10', 11' peuvent demander le partage d'une nouvelle donnée. Ledit premier terminal WAP 10, 11 ou ledit deuxième terminal WAP 10', 11' peuvent commander vers ledit dispositif intermédiaire 23 une nouvelle demande de partage de données.

Ledit partage de données est véritablement interactif, car lesdits premier ou deuxième terminaux WAP 10, 11, 10', 11' peuvent effectivement commander le partage d'une nouvelle donnée.

Selon le paramétrage du système, il est possible de limiter cette fonctionnalité et de prévoir que seul l'initiateur du partage de données reste le maître de toute nouvelle commande de partage de données. En particulier, uniquement ledit premier terminal WAP 10, 11 commande vers ledit dispositif intermédiaire 23 un nouvelle de demande de partage de données à partir de ladite donnée partagée avec ledit deuxième terminal 10', 11'.

L'un desdits premier et deuxième terminaux WAP 10, 11, 10', 11' émet une requête vers ledit serveur 22 de diffusion de données via ladite interface WAP 21 de la passerelle WAP 20.

L'interface WAP 21 analyse ladite requête reçue. Il reconnaît l'émetteur de ladite nouvelle demande de partage de données, soit l'un desdits premier et deuxième terminaux WAP 10, 11, 10', 11', et reconnaît que celui-ci participe déjà à un partage de données, grâce aux paramètres existants correspondant à ladite session WAP du partage, qui ont été sauvegardés précédemment.

L'interface WAP 21 de la passerelle WAP 20 envoie une requête vers ledit serveur WAP 24 de diffusion automatique en mode "push" pour commander la transmission de ladite nouvelle donnée à partager.

Ledit serveur WAP 24 de diffusion automatique en mode "push" envoie vers lesdits terminaux WAP 10, 11, 10', 11' un message en mode "push" de type SL (Service Loading, soit chargement de service), qui inclut au moins l'adresse URL de ladite nouvelle donnée à partager, émise par ledit terminal 10, 11, 10', 11' émetteur de la nouvelle demande de partage de données, ainsi qu'au moins un paramètre "ActionPush=NOK" indiquant à ladite interface WAP 21 de ne pas émettre un message en mode "push".

A la réception dudit message, ledit terminal WAP 10, 11, 10', 11' destinataire envoie automatiquement une requête vers le serveur 22 de diffusion de données via l'interface WAP 21 de la passerelle WAP 20. Ladite interface WAP 21 interprète le paramètre "ActionPush=NOK" et n'envoie pas de message push WAP.

Le serveur 22 de diffusion de données répond à ladite requête en transmettant la nouvelle donnée à partager vers ledit terminal 10, 11, 10', 11' grâce à l'interface WAP 21 de la passerelle WAP 20.

De la même façon, ladite donnée peut être partagée avec plusieurs interlocuteurs distants, en plus desdits premier et deuxième terminaux WAP 10, 11, 10', 11'.

Ladite interface WAP 21, qui a sauvegardé les paramètres du partage de la donnée précédente, reconnaît les participants audit partage de données. Par conséquent, le serveur 22 de diffusion de données transmet la nouvelle donnée à partager vers lesdits premier et deuxième terminaux WAP 10, 11, 10', 11'.

Ladite nouvelle donnée est visualisée sensiblement en temps réel par lesdits premier et deuxième terminaux WAP 10, 11, 10', 11', qui peuvent naviguer simultanément.

Il est possible de prévoir que lorsque ledit dispositif intermédiaire 23 reçoit ladite nouvelle demande de partage, il suspende le traitement de toute nouvelle demande de partage de données, qui pourrait arriver en provenance de l'un desdits premier et deuxième terminaux WAP 10, 11, 10', 11', jusqu'à la fin du traitement de ladite nouvelle demande de partage de données en cours.

Dans le cas où ledit premier terminal 10, 11 et ledit deuxième terminal 10', 11' utiliseraient des passerelles WAP 20 différentes, la suspension ne peut être mise en oeuvre que si le dispositif 25 de commande de partage effectue un suivi de l'état des demandes de partage de données grâce aux informations transmises par ladite interface WAP 21. L'interface WAP 21 contrôle alors les différentes requêtes des participants audit partage de données, permettant la transmission des informations nécessaires audit dispositif 25 de commande de partage de la passerelle WAP 20.

Par ailleurs, lesdits système et procédé, conforme à l'invention, permettent l'invitation d'au moins un troisième terminal WAP 14, appelé UE (User Equipement).

Lorsque lesdits premier et deuxième terminaux WAP 10, 11, 10', 11' sont en communication vocale ou écrite, l'un desdits terminaux WAP peut commander l'établissement d'une conférence avec trois correspondants. Par exemple, après la sélection d'un préfixe durant une communication téléphonique, l'un des utilisateurs desdits premier et deuxième terminaux WAP 10, 11, 10', 11' compose le numéro de téléphone d'un troisième terminal WAP 14 pour établir une conférence à trois correspondants.

Lesdits premier et deuxième terminaux WAP 10, 11, 10', 11' étant en communication vocale ou écrite, au moins un troisième terminal WAP 14 entre dans ledit partage de données après l'établissement de ladite conférence à trois.

Ledit serveur 26 de présence informe le dispositif 25 de commande de partage qu'une conférence à trois est établie. Lorsque l'un des utilisateurs desdits terminaux WAP en communication sélectionne ledit élément spécifique au partage de données, soit le lien hypertexte "Partager", ladite page d'identification des participants au partage de données permet d'inclure l'identifiant dudit troisième terminal WAP 14. De cette manière, ledit troisième terminal WAP 14 devient alors un nouveau participant audit partage en cours. Les paramètres de ladite session WAP du partage sont mis à jour pour inclure et identifier ledit troisième terminal WAP 14. Ledit dispositif 25 de commande de partage transmet au moins un paramètre dudit partage de données vers ladite interface WAP 21 de ladite passerelle WAP 20 après l'entrée dudit troisième terminal WAP 14.

Dans un autre mode de réalisation, un service de conférence de partage peut être proposé, basé sur lesdits système et procédé conforme à l'invention.

Une conférence est établie entre différents terminaux WAP. Lorsqu'un nouvel utilisateur se connecte à ladite conférence, ledit dispositif 25 de commande de partage propose audit nouvel utilisateur de la conférence de participer audit partage de données.

L'entrée dudit nouvel utilisateur dans une session WAP du partage en cours peut être commandée de différentes façons. Ledit nouvel utilisateur peut entrer dans la communication vocale ou écrite grâce à une conférence à trois, établie à partir de l'un desdits terminaux WAP 10, 11, 10', 11', de manière à être associé à ladite session WAP du partage s'il est déjà en cours. L'un desdits terminaux WAP 10, 11, 10', 11' peut faire entrer ledit nouvel utilisateur grâce à un deuxième élément spécifique, tel qu'un lien hypertexte dénommé "ajouter correspondant", introduit précédemment par ledit dispositif intermédiaire 23 dans ladite donnée à partager. Ledit lien hypertexte permet la transmission directe d'une requête vers ledit dispositif 25 de commande de partage pour participer audit partage de données.

Le serveur 26 de présence détecte l'arrivée dudit nouvel utilisateur et en informe ledit dispositif 25 de commande de partage. Ledit dispositif 25 de commande de partage propose l'entrée dudit nouvel utilisateur dans le partage de données par l'envoi d'une notification dans un message push WAP, tel que décrit précédemment.

A nouveau, les différents participants peuvent décider de sortir du partage de données et de naviguer séparément sur des données.

Quelque soit le mode de réalisation, lorsque l'un desdits terminaux WAP 10, 11, 10', 11' décide d'arrêter le partage de données, l'utilisateur clique sur le lien hypertexte "Arrêt du partage" existant sur la dernière donnée partagée. De ce fait, ledit terminal WAP 10, 11, 10', 11' envoie une requête d'arrêt de partage vers le dispositif 25 de commande de partage via l'interface WAP 21 de la passerelle WAP 20, pour commander l'arrêt dudit partage de données à partir de ladite donnée déjà partagée.

A la réception de ladite requête d'arrêt de partage, ledit dispositif 25 de commande de partage indique à l'interface WAP 21 que le partage doit être arrêté. L'interface WAP 21 met à jour les paramètres des sessions WAP du partage en indiquant l'arrêt dudit partage de données.

Ledit dispositif 25 de commande de partage ferme la session WAP dudit partage. Si existant, il informe ledit serveur 26 de présence que les états desdits terminaux WAP 10, 11, 10', 11' ne doivent plus être suivis. Lesdits terminaux WAP 10, 11, 10', 11' peuvent continuer à naviguer séparément sur des données.

De la même façon, les terminaux WAP 10, 11, 10', 11' peuvent décider de continuer ou non la communication vocale ou écrite en cours. S'ils décident d'arrêter ladite communication vocale ou écrite en cours, ledit serveur 26 de présence informe ledit dispositif 25 de commande de partage de la passerelle WAP 20 que ladite communication est arrêtée.

Le partage de données peut également être arrêté automatiquement, par exemple lors d'une coupure de la communication entre les terminaux WAP 10, 11, 10', 11', ou bien lorsque l'un des participants stoppe la communication établie, ou encore lorsque la liaison est coupée entre ledit réseau 30 de communication et ledit réseau 13 de télécommunications, sur lequel sont raccordés lesdits terminaux WAP 10, 11, 10', 11'.

Le dispositif 25 de commande de partage indique à ladite interface WAP 21 de la passerelle WAP 20 que ledit partage de données en cours est arrêté. L'interface WAP 21 met alors à jour les paramètres des sessions WAP desdits terminaux WAP 10, 11, 10', 11' en indiquant l'arrêt dudit partage de données. Le dispositif 25 de commande de partage ferme la session WAP dudit partage. A nouveau, lesdits terminaux WAP 10, 11, 10', 11' peuvent continuer à naviguer séparément sur des données.

## Revendications

1. Système de partage entre au moins un premier terminal WAP (10, 11), visualisant au moins une donnée située dans au moins un réseau (30) de communication comprenant au moins une passerelle WAP (20), et au moins un deuxième terminal WAP (10', 11'), mettant en oeuvre au moins une fonction de réception automatique en mode "push", **caractérisé en ce que** ledit système comprend au moins un dispositif (25) de commande de partage, hébergé par ladite passerelle WAP (20), apte à gérer au moins un paramètre au cours dudit partage de données et au moins un dispositif intermédiaire (23), hébergé par ladite passerelle WAP (20), apte à introduire au moins un élément spécifique audit partage dans au moins une donnée à partager entre lesdits premier et deuxième terminaux WAP (10, 11, 10', 11').

2. Système de partage selon la revendication 1, **caractérisé en ce que** le partage de ladite donnée est réalisé à distance.

3. Système de partage selon l'une des revendications 1 ou 2, **caractérisé en ce que** ledit partage de ladite donnée est interactif entre lesdits premier et deuxième terminaux WAP (10, 11, 10', 11').

4. Système de partage selon l'une quelconque des revendications 1 à 3, **caractérisé en ce que** ladite donnée partagée est visualisée sensiblement en temps réel par lesdits premier et deuxième terminaux WAP (10, 11, 10', 11').

5. Système de partage selon l'une quelconque des revendications 1 à 4, **caractérisé en ce que** le partage de ladite donnée est mis en oeuvre simultanément avec au moins une communication vocale entré lesdits premier et deuxième terminaux WAP (10, 11, 10', 11') par l'intermédiaire d'au moins un réseau (13) de télécommunications.

6. Système de partage selon l'une quelconque des revendications 1 à 4, **caractérisé en ce que** le partage de ladite donnée est mis en oeuvre simultanément avec au moins une communication écrite, en mode instantané, entre lesdits premier et deuxième terminaux WAP (10, 11, 10', 11') par l'intermédiaire d'au moins un réseau (13) de télécommunications.

7. Système de partage selon l'une quelconque des revendications 1 à 6, **caractérisé en ce que** le partage de ladite donnée est mis en oeuvre avec lesdits premier et deuxième terminaux WAP (10, 11, 10', 11') connectés indifféremment en fixe ou en mobile à un réseau (13) fixe ou cellulaire de télécommunications.

8. Système de partage selon l'une quelconque des revendications 1 à 7, **caractérisé en ce que** ledit dispositif (25) de commande de partage dialogue avec au moins un serveur WAP (24) de diffusion automatique en mode "push" pour réaliser le partage de ladite donnée entre lesdits premier et deuxième terminaux WAP (10, 11, 10', 11').

9. Système de partage selon l'une quelconque des revendications 1 à 8, **caractérisé en ce que** ledit dispositif (25) de commande de partage est séparé de ladite passerelle WAP (20).

10. Système de partage selon l'une quelconque des revendications 1 à 9, **caractérisé en ce que** ledit dispositif intermédiaire (23) est séparé de ladite passerelle WAP (20).

11. Système de partage selon l'une quelconque des revendications 1 à 10, **caractérisé en ce qu'**au moins un serveur (26) de présence transmet l'état de communication desdits premier et deuxième terminaux WAP (10, 11, 10', 11') vers ledit dispositif (25) de commande de partage.

12. Système de partage selon l'une quelconque des revendications 1 à 11, **caractérisé en ce que**, lesdits premier et deuxième terminaux WAP (10, 11, 10', 11') étant en communication vocale ou écrite, au moins un troisième terminal WAP (14) entre dans ledit partage de données après l'établissement d'une conférence à trois.

13. Dispositif (25) de commande de partage associé à un système de partage selon l'une quelconque des revendications 1 à 12, **caractérisé en ce qu'**il comprend au moins un moyen de gestion et de stockage d'au moins une session WAP du partage et d'au moins un paramètre, nécessaire au partage de ladite donnée, et au moins un moyen de transmission avec ledit dispositif intermédiaire (23), ladite interface WAP (21) et ledit serveur (24) de diffusion automatique en mode "push" pour réaliser le partage de ladite donnée entre lesdits premier et deuxième terminaux WAP (10, 11, 10', 11').

14. Dispositif intermédiaire (23) associé à un système de partage selon l'une quelconque des revendications 1 à 13, **caractérisé en ce qu'**il comprend au moins un moyen pour introduire et modifier au moins un élément spécifique audit partage dans au moins une donnée à partager et au moins un moyen de transmission avec ledit serveur (22) de diffusion de données, ledit dispositif (25) de commande de partage et ladite interface WAP (21 ).

15. Procédé de partage entre au moins un premier terminal WAP (10, 11), visualisant au moins une donnée située dans au moins un réseau (30) de communication comprenant au moins une passerelle WAP (20), et au moins un deuxième terminal WAP (10', 11'), mettant en oeuvre au moins une fonction de réception automatique en mode "push", **caractérisé en ce que** ledit procédé comporte les étapes consistant à :
- visualiser par au moins un premier terminal WAP (10, 11) au moins une donnée en provenance d'au moins un serveur (22) de diffusion de données, situé dans ledit réseau (30) de communication,
- transmettre au moins une demande de partage de ladite donnée par ledit premier terminal WAP (10, 11) vers au moins un dispositif (25) de commande de partage, hébergé par ladite passerelle WAP (20),
- introduire dans ladite donnée à partager par au moins un dispositif intermédiaire (23), hébergé par ladite passerelle WAP (20), au moins un élément spécifique audit partage entre lesdits premier et deuxième terminaux WAP (10, 11, 10', 11'),
- identifier ledit deuxième terminal WAP (10', 11') par ledit dispositif (25) de commande de partage,
- commander la transmission d'au moins une notification par ledit dispositif (25) de commande de partage vers ledit deuxième terminal WAP (10', 11') pour accepter le partage de données,
- dans le cas d'accord dudit deuxième terminal WAP (10', 11'), créer au moins une session WAP du partage par ledit dispositif (25) de commande de partage pour identifier ledit partage de données,
- transmettre au moins un paramètre dudit partage de données par ledit dispositif (25) de commande de partage vers au moins une interface WAP (21) de ladite passerelle WAP (20),
- commander par ladite interface WAP (21) la transmission de ladite donnée à partager vers lesdits premier et deuxième terminaux WAP (10, 11, 10', 11'),
- visualiser par lesdits premier et deuxième terminaux WAP (10, 11, 10', 11') ladite donnée à partager.

16. Procédé de partage selon la revendication 15, **caractérisé en ce que** ledit premier terminal WAP (10, 11) reçoit une page d'attente dudit dispositif (25) de commande de partage après ladite demande de partage de données.

17. Procédé de partage selon l'une des revendications 15 ou 16, **caractérisé en ce que** ledit dispositif intermédiaire (23) modifie ledit élément spécifique audit partage, introduit dans ladite donnée à partager, pour la commande de l'arrêt du partage de ladite donnée.

18. Procédé de partage selon l'une des revendications 15 à 17, **caractérisé en ce que** ledit dispositif intermédiaire (23) introduit dans ladite donnée à partager un deuxième élément spécifique pour ajouter au moins un troisième terminal WAP (14) dans ledit partage de données.

19. Procédé de partage selon l'une quelconque des revendications 15 à 18, **caractérisé en ce que** ledit dispositif (25) de commande de partage transmet au moins un paramètre dudit partage de données vers au moins une interface WAP (21) de ladite passerelle WAP (20) après l'entrée d'au moins un troisième terminal WAP (14).

20. Procédé de partage selon l'une quelconque des revendications 15 à 19, **caractérisé en ce que** l'un desdits premier et deuxième terminaux WAP (10, 11, 10', 11') commande vers ledit dispositif intermédiaire (23) un nouvelle de demande de partage de données à partir de ladite donnée partagée.

21. Procédé de partage selon l'une quelconque des revendications 15 à 19, **caractérisé en ce qu'**uniquement ledit premier terminal WAP (10, 11) commande vers ledit dispositif intermédiaire (23) un nouvelle de demande de partage de données à partir de ladite donnée partagée avec ledit deuxième terminal (10', 11').

22. Procédé de partage selon l'une quelconque des revendications 15 à 21, **caractérisé en ce que** ledit dispositif intermédiaire (23) suspend le traitement d'une nouvelle demande de partage de données en provenance de l'un desdits premier et deuxième terminaux WAP (10, 11, 10', 11') lorsque ledit partage de données est en cours de traitement.

23. Procédé de partage selon l'une quelconque des revendications 15 à 22, **caractérisé en ce que** l'un desdits premier et deuxième terminaux WAP (10, 11, 10', 11') commande l'arrêt dudit partage de données à partir de ladite donnée partagée vers ledit dispositif (25) de commande de partage.
